## Europäisches Patentamt

## European Patent Office

## Office européen des brevets

(19)

(11) Veröffentlichungsnummer: **0 162 874**

**B1**

(12) # EUROPÄISCHE PATENTSCHRIFT

(45) Veröffentlichungstag der Patentschrift:
**04.02.87**

(21) Anmeldenummer: **84904121.5**

(22) Anmeldetag: **02.11.84**

(86) Internationale Anmeldenummer:
**PCT/EP 84/00346**

(87) Internationale Veröffentlichungsnummer:
**WO 85/01884 (09.05.85 Gazette 85/11)**

(51) Int. Cl.⁴: **B 01 D 12/00,** B 01 D 17/00,
B 09 B 5/00, B 03 B 9/02

(54) **REINIGUNGS- UND ABSCHEIDEEINRICHTUNG FÜR ÖL-FESTSTOFF-GEMISCHE.**

(30) Priorität: **04.11.83 DE 3339955**

(43) Veröffentlichungstag der Anmeldung:
**04.12.85 Patentblatt 85/49**

(45) Bekanntmachung des Hinweises auf die Patenterteilung:
**04.02.87 Patentblatt 87/6**

(84) Benannte Vertragsstaaten:
**DE FR NL**

(56) Entgegenhaltungen:
**EP-A-0 045 542**
**DE-A-2 531 732**
**DE-A-2 837 554**
**DE-A-2 942 630**
**DE-A-3 107 256**
**FR-A-563 883**
**FR-A-598 462**

(73) Patentinhaber: **Apfelbaum, Helmut, Auf'm Kolm 32,
D-4690 Herne 1 (DE)**

(72) Erfinder: **Apfelbaum, Helmut, Auf'm Kolm 32,
D-4690 Herne 1 (DE)**

(74) Vertreter: **Patentanwälte Kirschner & Grosse,
Herzog- Wilhelm- Strasse 17, D-8000 München 2
(DE)**

LIBER, STOCKHOLM 1987

**Beschreibung**

Die Erfindung betrifft eine Reinigungs- und Abscheideeinrichtung für Öl-Feststoff-Gemische nach Oberbegriff des Hauptanspruches.

Aus der EP-A- 0 045 542 ist eine solche Einrichtung bekannt, wobei das von der Injektordüseneinrichtung aufbereitete Öl-Feststoff-Waschflüssigkeitsgemisch einer Feststoff-Abscheideeinrichtung und einer Trenneinrichtung zugeführt wird, in der das Öl von der Waschflüssigkeit getrennt wird. Bei der bekannten Einrichtung werden separate, in an sich bekannter Weise aufgebaute Aggregate zum Trennen der Feststoffe von der flüssigen Komponente und zum Auftrennen der flüssigen Komponente in Öl und Wasser eingesetzt, was einen hohen Bauaufwand bedeutet und im praktischen Einsatz der Anlage unhandlich ist.

Demgegenüber liegt der Erfindung die Aufgabe zugrunde, eine Reinigungs- und Abscheideeinrichtung der eingangs genannten Art möglichst kompakt auszubilden, so daß die Einrichtung leicht an den Einsatzort transportiert und dort mit möglichst wenig Aufwand aufgestellt werden kann, wobei die Einrichtung auch einen guten Wirkungsgrad haben soll.

Zur Lösung dieser Aufgabe ist die Reinigungs- und Abscheideeinrichtung in der in dem Hauptanspruch angegebenen Weise ausgeführt. Der Trennbehälter und die Austrageinrichtung sind kompakt ausgeführt und können entweder fest auf einem LKW montiert oder als absetzbare Einheit ausgeführt sein. Die die Einrichtung ergänzenden Aggregate, nämlich die Injektordüseneinrichtung und eine Ölpumpe sowie gegebenenfalls ein weiterer Trennbehälter, wie er beispielsweise in Anspruch 4 angegeben ist, sind ebenfalls leicht transportabel und montierbar. Trotz der Kompaktheit der Einrichtung erfolgt die Trennung von Öl, Feststoffen und Waschflüssigkeit in mehreren Stufen, so daß ein guter Wirkungsgrad erzielt wird.

Vorteilhafte Ausgestaltungen der Erfindung ergeben sich aus den restlichen Unteransprüchen.

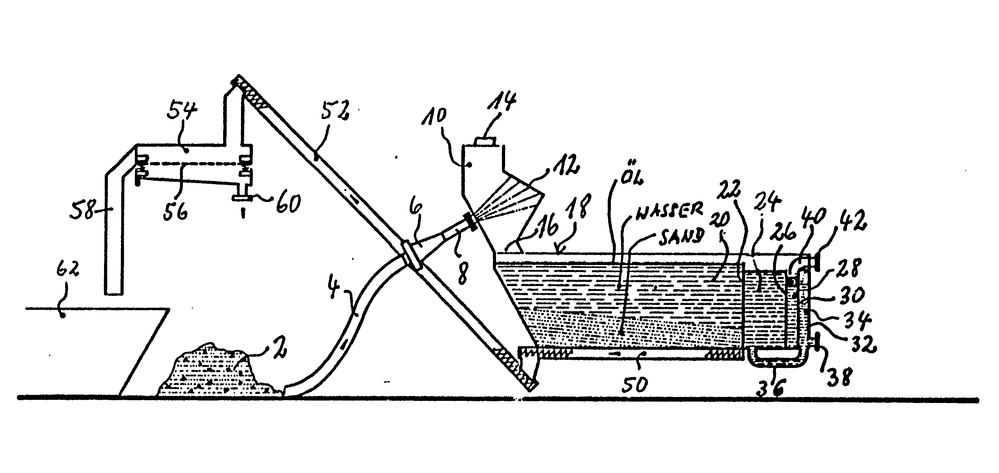

Ein Ausführungsbeispiel der Erfindung wird nun anhand der beiliegenden Zeichnung beschrieben, die eine schematische Darstellung der erfindungsgemäßen Reinigungs- und Abscheideeinrichtung für Öl-Feststoff-Gemische zeigt.

Bei der im folgenden beschriebenen Reinigungs- und Abscheideeinrichtung wird mit Öl verschmutzter Sand oder mit Öl verschmutztes Erdreich, das Wasser enthalten kann, gereinigt, wozu Wasser als Waschflüssigkeit verwendet wird. Die beschriebene Einrichtung kann jedoch auch andere Öl-Feststoff-Gemische, beispielsweise mit Öl verschmutzten Walzzunder, mit Hilfe von anderen Waschflüssigkeiten, beispielsweise mit chemischen Substanzen angereicherten Waschflüssigkeiten, verarbeiten.

Der Ölsand 2 wird über eine Leitung 4 in die Injektordüse 6 der Injektordüseneinrichtung gesaugt. Die Injektordüseneinrichtung ist in der in der EP-A 0 045 542 beschriebenen Weise aufgebaut, wobei der Injektordüse 6 von einer Hochdruckpumpe (nicht gezeigt) Wasser unter einem Druck von etwa 250 bar zugeführt wird, das einen Wasservorhang mit subatmosphärischem Druck in der Injektordüse 6 erzeugt, so daß der Ölsand über die Leitung 4 angesaugt wird und von der Injektordüse 6 über eine weitere Leitung 8 abgeleitet wird. Beim Durchtritt des Ölsandes durch den Wasservorhang werden starke Kräfte auf den Ölsand ausgeübt, so daß der Sand in seine kleinsten Teilchen zerlegt und das daran haftende Öl von den Teilchen abgelöst wird. Das Öl-Sand-Wasser-Gemisch, welches die Injektordüse 6 verläßt, ist daher in geeigneter Weise "aufgeschlossen", um anschließend in die Bestandteile Öl, Sand und Wasser getrennt zu werden.

Das von der Leitung 8 abgegebene Gemisch wird in eine Aufgabekammer 10 eingeleitet, die eine Prallplatte 12 für den von der Injektordüse 6 abgegebenen Strahl des Öl-Wasser-Sand-Gemisches aufweist. In der Aufgabekammer 10 wird der Druck des Injektorstrahls aufgefangen und Luft, die zusammen mit dem Ölsand über die Injektordüse 6 angesaugt wurde, kann durch eine Öffnung 14 am oberen Teil der Aufgabekammer entweichen. Die Prallplatte 12 ist, wie in der Figur dargestellt ist, im Schnitt kegelförmig ausgeführt, wobei der Injektorstrahl im wesentlichen in die in Strahlrichtung des Injektorstrahls weisende Spitze des Kegels gerichtet ist. Dadurch wird in der Prallplatte 12 im wesentlichen der gesamte Injektorstrahl aufgefangen, so daß das Öl-Wasser-Sand-Gemisch mit verminderter Energie durch eine Öffnung 16 nach unten aus der Aufgabekammer 10 austritt.

Die Aufgabekammer 10 ist mit ihrer Öffnung 16 über dem einen Ende eines Trennbehälters 18 angeordnet, so daß das Öl-Wasser-Sand-Gemisch in den Trennbehälter 18 fließt. Unter der Aufgabekammer 10 liegt eine Absetzkammer 20 des Trennbehälters 18, die einerseits von den Wandungen des Trennbehälters 18 und andererseits von einer Trennwand 22 gebildet ist. In der Absetzkammer 20 setzt sich der Sand vom Boden ab, während das Öl als schaumiger Film auf dem Wasser schwimmt, welches den Sand abdeckt. Da die Trennwand 22 eine geringere Höhe als die Außenwand des Trennbehälters 18 hat, fließt das Öl nach Erreichen des entsprechenden Füllstandes über die Trennwand 22 aus der Absetzkammer 20 in eine Ölabscheidekammer 24 über, die von den Wandungen des Behälters 18, der Trennwand 22 und einer weiteren Trennwand 26 gebildet wird, die eine geringere Höhe als die Trennwand 22 hat. In der Ölabscheidekammer 24 findet eine weitere Trennung von Öl und Wasser statt, und das auf dem Wasser schwimmende Öl tritt nach Erreichen eines entsprechenden Füllstandes über die Trennwand 26 in eine Ölsammelkammer 28 über, die von den Wandungen des Trennbehälters 18, der Trennwand 26 und einer weiteren Trennwand 30 gebildet wird, die die gleiche Höhe wie die Trennwand 26 hat. Zwischen der Trennwand 30 und einer Rückwand 32 des Trennbehälters 18 wird schließlich eine Wasserkammer 34 gebildet, die über eine Leitung 36 mit dem Boden der Ölabscheidekammer 24 verbunden ist. In der Leitung 36 befinden sich zwei Ventile (nicht gezeigt), von denen eines am Austritt der Leitung 36 in die Ölabscheidekammer 24 und das andere beim Eintritt der Leitung 36 in die Wasserkammer 34 liegt. Mit Hilfe dieser Ventile wird der Füllstand in der Ölabscheidekammer 24 geregelt. Das Wasser kann über einen Auslaß 38 aus der Wasserkammer 34 abgezogen und in den Wasserkreislauf der Injektordüseneinrichtung zurückgeführt werden. Das Wasser, welches sich im unteren Teil der Ölsammelkammer 28 sammelt, kann durch einen Auslaß (nicht gezeigt) im unteren Teil der Ölsammelkammer 28 abgeleitet und in die Absetzkammer 20 zurückgeführt werden. Das Öl aus der Ölsammelkammer 28 wird von einer Vakuumpumpe (nicht gezeigt) über eine Absaugleitung 40 und einen Stutzen 42 abgesaugt. Hierzu ragt das offene Ende der Absaugleitung 40 geringfügig in die Ölsammelkammer 28 hinein.

Der Trennbehälter 18 ist in einer Richtung senkrecht zur Zeichenebene der Figur V-förmig ausgebildet, und am Bodenbereich der Absetzkammer 20 ist eine Austrageinrichtung in Form einer Schnecke 50 vorgesehen, durch die der sich am Boden der Absetzkammer 20 absetzende Sand aus dem Trennbehälter 18 abtransportiert wird. Aus der Schnecke 50 wird der Sand in eine weitere Schnecke 52 abgegeben, die den feuchten Sand einem weiteren Trennbehälter 54 zuführt, in dem Restwasser aus dem feuchten Sand abgeschieden wird. Der Trennbehälter 54 umfaßt ein Vibrationssieb 56, durch das der Sand zu einem Austragrohr 58 transportiert wird, während das Restwasser durch das Sieb abtropft und über einen Anschlußstutzen 60 über eine Leitung (nicht gezeigt) in den Absetzbehälter 20 und damit in den Kreislauf zurückgeführt wird. Der gereinigte Sand wird über das Austragrohr 58 in einen darunter bereitgestellten Container 62 abgefüllt.

Wie sich aus der vorhergehenden Beschreibung ergibt, kann der Ölsand 2 durch die Reinigungs- und Abscheideeinrichtung so verarbeitet werden, daß der gereinigte Sand einerseits und das Öl andererseits getrennt anfallen, während das in der Einrichtung benötigte Wasser im Kreislauf geführt wird.

## Patentansprüche

1. Reinigungs- und Abscheideeinrichtung für Öl-Feststoff-Gemische mit einer Injektordüseneinrichtung, in der das Öl von dem Feststoff mit Hilfe einer Waschflüssigkeit getrennt wird, und mit einer Abscheideeinrichtung, in der die festen und flüssigen Bestandteile des von der Injektordüse abgegebenen Öl-Waschflüssigkeits-Feststoff-Gemisches abgeschieden werden,
dadurch gekennzeichnet, daß
die Abscheideeinrichtung aus (a) einem Trennbehälter (18) und (b) einer Austrageinrichtung (50) für Feststoffe besteht, wobei der Trennbehälter (a.1) eine Absetzkammer (20) zum Trennen der festen von den flüssigen Bestandteilen; (a.2) eine Ölabscheidekammer (24), die von der Absetzkammer (20) durch eine erste Trennwand (22) abgetrennt ist und den Überlauf aus der Absetzkammer (20) aufnimmt; (a.3) eine Ölsammelkammer (28), die von der Ölabscheidekammer (24) durch eine zweite Trennwand (26) abgetrennt ist und den Überlauf aus der Ölabscheidekammer (24) aufnimmt; und (a.4) eine Waschflüssigkeitssammelkammer (34), die von der Ölsammelkammer durch eine dritte Trennwand abgetrennt ist und mit dem Bodenbereich der Ölabscheidekammer (24) in Flüssigkeitsverbindung steht, aufweist; und wobei die Austrageinrichtung (50) am Bodenbereich der Absetzkammer (20) angeordnet ist.

2. Einrichtung nach Anspruch 1,
dadurch gekennzeichnet, daß
der Trennbehälter (18) einen V-förmigen Querschnitt hat, und daß die Austrageinrichtung (50) eine Schnecke ist.

3. Einrichtung nach Anspruch 1,
dadurch gekennzeichnet, daß
die Abscheideeinrichtung eine Aufgabekammer (10) über der Absetzkammer (20) aufweist, an die die Injektordüse (6) angeschlossen ist und die eine Prallplatte (12) zum Auffangen des von der Injektordüse (6) abgegebenen Strahls des Öl-Waschflüssigkeits-Feststoff-Gemisches aufweist.

4. Einrichtung nach Anspruch 1,
dadurch gekennzeichnet, daß
der Austrageinrichtung (50) ein weiterer Trennbehälter (54) zum Abtrennen von restlicher Waschflüssigkeit aus dem Waschflüssigkeits-Feststoff-Gemisch nachgeschaltet ist.

5. Einrichtung nach Anspruch 4,
dadurch gekennzeichnet, daß
der zusätzliche Trennbehälter (54) ein Vibrationssieb (56) umfaßt.

## Claims

1. Installation for the purification and separation of mixtures of oil and solid materials, comprising an injector nozzle means to separate the oil from the solid materials using a washing liquid, and further comprising a separation means to separate the solid and the liquid components of the oil/washing liquid/solid mixture supplied from the injector nozzle, characterised in that the separation installation comprises (a) a separation vessel (18) and (b) a discharge means (50) to discharge solids, the separation vessel comprising (a.1) a settling chamber (20) to separate the solid from the liquid components; (a.2) an oil separation chamber (24) separated from the settling chamber (20) by a first partition (22) and receiving the overflow from the settling chamber (20); (a.3) an oil collecting chamber (28) separated from the oil separation chamber (24) by a second partition (26) and receiving the overflow from the oil separation chamber (24); and (a.4) a collecting chamber (34) for the washing liquid, which is separated from the oil separation chamber by a third partition and which is in flow communication with the bottom area of the oil separation chamber (24); the discharge means (50) being located in the bottom area of the discharge chamber (20).

2. Installation according to Claim 1, characterised in that the separation vessel (18) is of V-shaped cross-section and that the discharge means (50) comprises a worm.

3. Installation according to Claim 1, characterised in that the separation installation comprises a feed chamber (10) located above the settling chamber (20) with an injector nozzle (6) being connected to said feed chamber, and which feed chamber (10) comprises a baffle plate (12) for collecting the jet of the oil/washing liquid/solid mixture supplied from the injector nozzle (6).

4. Installation according to Claim 1, characterised in that the discharge means (50) is succeeded by a further separation tank (54) to sseparate residual washing liquid from the washing liquid/ solid mixture.

5. Installation according to Claim 4, characterised in that the further separation tank (54) comprises a vibration screen (56).

**Revendications**

1. Installation de purification et de séparation pour mélanges d'huile et de matières solides, comprenant un dispositif de tuyère injectrice, dans lequel l'huile est séparée de la matière solide à l'aide d'un liquide laveur, et une installation de séparation, dans laquelle on sépare les composants solides et liquides du mélange d'huile, de liquide laveur et de matières solides délivré par la tuyère injectrice, caractérisée en ce que l'installation de séparation comprend (a) un récipient séparateur (18) et (b) un dispositif de décharge (50) pour les matières solides, le récipient séparateur comprenant (a.1) une chambre de décantation (20) destinée à séparer les composants solides des composants liquides; (a.2) une chambre de séparation d'huile (24) qui est séparée de la chambre de décantation (20) par une première cloison (22) et qui recueille la surverse de la chambre de décantation (20); (a.3) une chambre de captage d'huile (28) qui est séparée de la chambre de séparation d'huile (24) par une deuxième cloison (26) et qui recueille la surverse de la chambre de séparation d'huile (24); et (a.4) une chambre de captage de liquide laveur (34) qui est séparée de la chambre de captage d'huile par une troisième cloison et qui est en communication liquide avec la zone du fond de la chambre de séparation d'huile (24); le dispositif de décharge (50) étant disposé dans la zone du fond de la chambre de décantation (20).

2. Installation selon la revendication 1, caractérisée en ce que le recipient séparateur (18) présente une coupe en V et que le dispositif de décharge (50) est une vis sans fin.

3. Installation selon la revendication 1, caractérisée en ce que l'installation de séparation présente une chambre d'alimentation (10) placée au-dessus de la chambre de décantation (20), à laquelle est raccordée la tuyère injectrice (6) et qui présente une chicane (12) destinée à capter le jet du mélange d'huile, de liquide laveur et de matières solides délivré par la tuyère injectrice (6).

4. Installation selon la revendication 1, caractérisée en ce que le dispositif de décharge (58) est suivi d'un autre réservoir séparateur (54) destiné à séparer le liquide laveur résiduel du mélange de liquide laveur et de matières solides.

5. Installation selon la revendication 4, caractérisée en ce que l'autre réservoir séparateur (54) comprend un tamis vibrateur (56).

ÖL

WASSER

SAND

0162874